# EUROPÄISCHE PATENTSCHRIFT

(11) **EP 1 178 221 B1**
(45) Veröffentlichungstag und Bekanntmachung des Hinweises auf die Patenterteilung: **29.12.2004**
(21) Anmeldenummer: 01115779.9
(22) Anmeldetag: 10.07.2001
(51) Int. Cl.: F15B 13/04, F16K 11/07, F16K 27/00, F15B 13/00

(54) **Mehrwegeventil**
Multiway valve
Distributeur à plusieurs voies

(30) Priorität: 11.07.2000 DE 10034935
(43) Veröffentlichungstag der Anmeldung: 06.02.2002
(73) Patentinhaber: Bosch Rexroth Teknik AB, 125 81 Stockholm (SE)
(72) Erfinder: Fagerström, Peter, 14173 Huddinge (SE)
(74) Vertreter: Maiwald Patentanwalts GmbH

(56) Entgegenhaltungen:
- DE-A- 3 530 019
- DE-A- 19 839 192
- DE-A- 19 843 122
- US-A- 3 464 444

## Beschreibung

### Erfindungsgegenstand

Die vorliegende Erfindung bezieht sich auf ein Mehrwegeventil zur Steuerung eines Druckmittelflusses, beispielsweise aus Druckluft. Insbesondere betrifft die Erfindung eine spezielle Ventilschieberanordnung gemäß eines Mehrwegeventils entsprechend dem Oberbegriff des Anspruchs 1.

### Hintergrund der Erfindung

Derartige Mehrwegeventile sind aus der DE 44 00 760 C2 bekannt. Das gezeigte Mehrwegeventil umfasst ein Ventilgehäuse, durch das eine sich axial erstreckende lange Bohrung verläuft. Die lange Bohrung besitzt ringförmige Absätze, um innere Kammern zu bilden. Die inneren Kammern stehen mit mehreren äußeren Anschlüssen in Verbindung. Innerhalb der Ventilbohrung ist ein Ventilschieber angeordnet und über druckmittelbetriebene stirnseitige Antriebskolben längsbewegbar ist, um die Druckmittelversorgung an zwei Arbeitsanschlüssen zu beeinflussen.

Die Ventilschieberanordnung umfasst hier zwei separate Ventilschieber, die jeweils einem der beiden Arbeitsanschlüsse zugeordnet sind. Die Ventilschieber sind koaxial hintereinanderliegend innerhalb der langen Ventilbohrung von deren einem Ende ausgehend zum anderen Ende hin angeordnet und können unabhängig voneinander je nach anliegendem Steuerdruck an den jeweiligen Antriebskolben bewegt werden. Durch diese Maßnahme können in einem einzigen Ventilgehäuse zwei separate Ventile integriert werden. Die beiden gemeinsam im Ventilgehäuse angeordneten Ventilschieber führen jeweils eine 3/2-Wegefunktion aus.

Das vorstehend beschriebene bekannte Mehrwegeventil ist derart konstruiert, dass die beiden Ventilschieber austauschbar sind gegen einen einzigen Ventilschieber, um insoweit eine 5/2- oder 5/3-Wegefunktion zu realisieren.

Jedoch verursacht die konventionelle, längs durch das Ventilgehäuse verlaufende Ventilbohrung einen langen Ventilhub, um den Durchlass zu bilden, der zwischen dem Ventilschieber und dem Ventilgehäuse für den Druckmittelfluss erforderlich ist. Der lange Hub verursacht eine lange Schaltzeit und ein recht lang bauendes Ventilgehäuse.

Es ist die Aufgabe der vorliegenen Erfindung, ein im Vergleich zum Stand der Technik kompakter gestaltetes Mehrwegeventil zu schaffen, das einen kurzhubigen Ventilschieber besitzt, um eine kurze Schaltzeit zu ermöglichen.

### Zusammenfassung der Erfindung

Die Aufgabe wird bei einem Mehrwegeventil der vorstehend diskutierten Art durch die Merkmale des Anspruchs 1 gelöst. Demnach umfasst die erfindungsgemäße Ventilschieberanordnung zumindest zwei Ventilschieber, die parallel zueinander und in derselben Ebene in zugeordneten, innerhalb des Ventilgehäuses verlaufenden Querbohrungen angeordnet sind. Die Ventilschieber sind unabhängig voneinander oder auch gleichzeitig innerhalb der jeweiligen Bohrungen bewegbar.

Die Ventilschieberanordnung der vorliegenden Erfindung ermöglicht ein kompakt gestaltetes Ventilgehäuse, weil die Ventilbohrungen für die Ventilschieberanordung quer zum Ventilgehäuse und nicht entsprechend dessen Längserstreckung verlaufen. Damit kann ein schnell agierendes Mehrwegeventil geschaffen werden. Die Ventilschieber sind im Durchmesser größer als in der Länge, um ein extrem schmales Ventilgehäuse zu gewährleisten, das zur Bildung einer Ventileinheit besonders geeignet ist.

Gemäß einer bevorzugten Ausführungsform der Erfindung umfasst die Ventilschieberanordnung genau zwei Ventilschieber, die innerhalb zweier korrespondierender Bohrungen des Ventilgehäuses angeordnet sind und vorzugsweise einen gemeinsamen Speisedruckanschluss, einen gemeinsamen Entlüftungsanschluss sowie zwei Arbeitsanschlüsse aufweisen und die unabhängig voneinander oder gemeinsam betreibbar sind, um insoweit verschiedene Ventilfunktionen umzusetzen. Vorzugsweise ist der erfindungsgemäße Ventilschieber topfartig ausgebildet, wobei innerhalb der so gebildeten Kammer eine Rückstellfeder untergebracht ist, die zwischen dem Ventilschieber und dem Ventilgehäuse wirkt, um ein monostabiles Ventil zu bilden. Weiterhin kann am Ventilgehäuse ein Pilotventil angeordnet sein, um den zum Betrieb des Ventilschiebers erforderlichen Steuerdruck zu liefern, so dass der Ventilschieber gegen die Kraft der Rückstellfeder bewegbar ist. Durch einfaches Entfernen der Rückstellfeder und Hinzufügen eines weiteren Pilotventils ist es auf einfache Weise möglich, ein bistabiles Ventil zu bilden. Der Ventilschieber kann derart geformt sein, dass eine "normally-closed (NC)"-Funktion oder eine "normally-open (NO)"-Funktion ausführbar ist. Dies wird durch die Anordnung ringförmiger Dichtungen auf hierfür vorgesehenen Absätzen an dem Ventilschieber in verschiedenen definierten axialen Abständen realisiert. Es ist auch möglich, die Dichtungen seitens des Ventilgehäuses anzuordnen. Im Ergebnis dessen sind verschiedene 3/2-, 5/2- oder 5/3-Ventilfunktionen durch das erfindungsgemäße Mehrwegeventil auf einfache Weise umsetzbar.

Gemäß einer weiteren Verbesserung der Erfindung sind die äußeren Ventilanschlüsse an einer einheitlichen Anschlussfläche des Ventilgehäuses angeordnet und im wesentlichen nutartig entlang der Anschlussfläche und quer verlaufend zur Achse der Ventilschieber angeordnet. Die Ventilanschlüsse bilden eine Verbindung zwischen dem Mehrwegeventil und einem Druckmittelverteiler. Alternativ hierzu ist es auch möglich, dass zumindest der Speisedruckanschluss und der Entlüftungsanschluss direkt im Ventilgehäuse als Durchgangsbohrungen parallel zur Achse der Ventilbohrungen verlaufen, um gemeinsame Speisedruck- und Entlüftungskanäle durch Aneinanderreihung mehrerer Ventilgehäuse zu bilden. In diesem Fall kann ein separater Druckmittelverteiler entfallen.

Um den verfügbaren Platz auf der Montagefläche effektiv zu nutzen, sind die nutartigen Anschlüsse vorzugsweise in drei Reihen angeordnet, wobei der gemeinsame Entlüftungsanschluss von zwei koaxial hintereinanderliegenden Arbeitsanschlüssen gefolgt wird, welche von einem gemeinsamen Speisedruckanschluss gefolgt werden.

Weitere die Erfindung verbessernde Maßnahmen werden nachstehend gemeinsam mit der Beschreibung eines bevorzugten Ausführungsbeispiels der Erfindung anhand der Figuren näher dargestellt.

### Kurzbeschreibung der Zeichnungen

Figur 1 zeigt eine Seiten-, Unter- und Draufsicht auf ein erfindungsgemäßes Mehrwegeventil, das mit einem Druckmittelverteiler in Verbindung steht,
Figur 2 zeigt eine Seitenansicht einer weiteren Ausführungsform des erfindungsgemäßen Mehrwegeventils, hier ohne Druckmittelverteiler,
Figur 3a zeigt eine Querschnittsansicht des Ventilschiebers, der als NC-Ventilschieber ausgebildet ist und
Figur 3b zeigt eine Querschnittsansicht eines Ventilschiebers, der als NO-Ventilschieber ausgebildet ist.

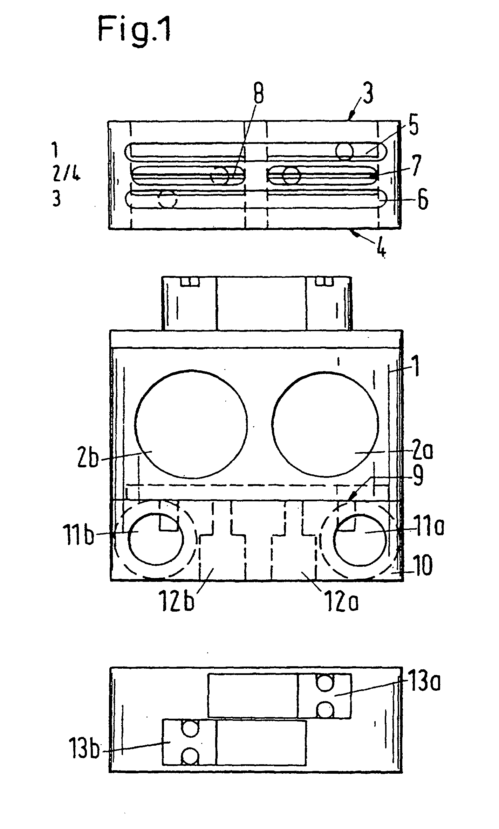

Das in Figur 1 dargestellte pneumatische Mehrwegeventil besitzt ein flaches blockartiges Ventilgehäuse 1. Das Ventilgehäuse 1 umfasst zwei Ventilbohrungen 2a und 2b, die quer durch das Ventilgehäuse 1 verlaufen, d. h. ausgehend von der ersten großflächigen Frontseite 3 zu der zweiten großflächigen parallel hierzu angeordneten Frontseite 4. Die Bohrungen 2a und 2b sind durch Verschlusskappen verschlossen, die an beiden Frontseiten 3 und 4 des Ventilgehäuses 1 angeordnet sind. Die Ventilbohrungen 2a und 2b stehen mit zugeordneten äußeren Anschlüssen in Verbindung. Beide Ventilbohrungen 2a und 2b sind mit einem gemeinsamen Speisedruckanschluss 5 und einem gemeinsamen Entlüftungsanschluss 6 verbunden. Die Ventilbohrung 2a ist mit einem zugeordneten Arbeitsanschluss 7; die Ventilbohrung 2b dagegen mit einem anderen zugeordneten Arbeitsanschluss 8 verbunden. Alle Anschlüsse 5 bis 8 sind an einer Montagefläche 9 des Ventilgehäuses 1 platziert. Die Anschlüsse 5 bis 8 sind nutartig entlang der Montagefläche 9 und quer zur Achse der Ventilbohrungen 2a und 2b verlaufend angeordnet. Somit bilden die Anschlüsse 5 bis 8 eine Verbindung zu einem Druckmittelverteiler 10. Die nutartigen Anschlüsse 5 bis 8 verlaufen in drei parallelen Reihen, wobei der gemeinsame Entlüftungsanschluss 6 von den beiden koaxial nebeneinanderliegenden Arbeitsanschlüssen 7 und 8 gefolgt ist, welche vom gemeinsamen Speisedruckanschluss 5 gefolgt sind. Der Druckmittelverteiler 10 umfasst gemeinsame Kanäle 11 a und 11b, um weitere gleichartige Ventilgehäuse zur Bildung einer Ventileinheit aufzunehmen. Weiterhin umfasst der Druckmittelverteiler 10 zwei Durchgangsbohrungen 12a und 12b, um geeignete Anschlüsse zur Anbindung von Arbeitsleitungen bereitzustellen. Das Mehrwegeventil wird durch zwei Pilotventile 13a und 13b angesteuert, die auf der Oberseite des Ventilgehäuses 1 angeordnet sind.

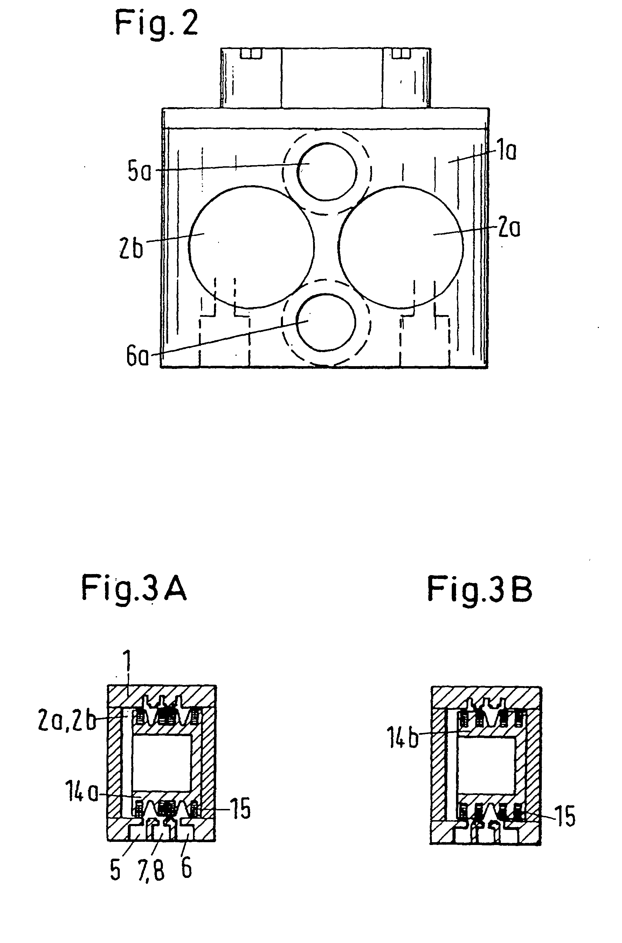

Alternativ hierzu kann das Ventilgehäuse 1a gemäß Figur 2 einen gemeinsamen Druckmittelversorgungsanschluss 5a und einen gemeinsamen Entlüftungsanschluss 6a besitzen, die direkt im Ventilgehäuse 1a als Durchgangsbohrungen parallel zur Achse der beiden Ventilbohrungen 2a und 2b verlaufen. Diese Anordnung des Speisedruckanschlusses 5a und des Entlüftungsanschlusses 6a gestatten duch Aneinanderreihung mehrerer gleichartig ausgebildeter Ventilgehäuse die Zusammenstellung einer Ventileinheit, ohne dass ein separater Druckmittelverteiler erforderlich ist.

Gemäß Figur 3a ist zur Steuerung des Druckmittelflusses durch das Ventilgehäuse 1 und damit zwischen den Anschlüssen 5 bis 8 je ein Ventilschieber 14 in den Ventilbohrungen 2a und 2b untergebracht. Der hier dargestellte Ventilschieber 14a ist durch die Anordnung der Dichtringe 15 in unterschiedlichen axialen Abständen derart ausgebildet, dass eine "normally-open (NO)"-Ventilfunktion ausführbar ist. Der zylindrische Ventilschieber 14 ist im Durchmesser größer als in der Länge, um ein möglichst schmales Ventilgehäuse für eine vorteilhafte Anordnung mehrerer Mehrwegeventile zu einer Ventileinheit zu ermöglichen. Der Ventilschieber 14 ist topfartig ausgebildet und umfasst eine Kammer 16, um die Möglichkeit zu eröffnen, hierin eine - in dieser Figur nicht gezeigte - Rückstellfeder zur Ausführung einer monostabilen Ventilfunktion unterzubringen. Zumindest ein - hier ebenfalls nicht gezeigtes - Pilotventil ist vorgesehen, um einen Steuerdruck zur Bewegung des zugeordneten Ventilschiebers 14 in zumindest eine Richtung zu generieren.

Der in Figur 3b dargestellte Ventilschieber 14b ist durch die Anordnung seiner Dichtringe 15 derart gestaltet, dass eine "normally-closed (NC)"-Ventilfunktion ausführbar ist. Durch Verwendung der vorstehend beschriebenen zwei unterschiedlichen Ventilschieber 14a (Figur 3a) und 14b (Figur 3b) sind die nachfolgend aufgeführten Ventilfunktionen umsetzbar:

| Ventilfunktion | erster Ventilschieber | zweiter Ventilschieber | Ventilschieber arbeiten... | Rückstellfeder | Pilotventil (e) |
|---|---|---|---|---|---|
| 5/2-einfachwirkend | NC | NO | simultan | ja | eins |
| 5/2 doppeltwirkend | NC | NO | simultan | nein | zwei |
| 5/3 normal geschlossen | NC | NO | simultan | ja | zwei |
| 5/3 zentral entlüftend | NC | NC | unabhängig | ja | zwei |
| 5/3 zentral speisend | NO | NO | unabhängig | ja | zwei |
| 3/2 normal geschlossen | NC | NC | simultan | nein | zwei |

Die Erfindung ist nicht beschränkt auf die vorstehend angegebenen bevorzugten Ausführungsbeispiele. Es sind auch Abweichungen hiervon denkbar, die trotz anderer konstruktiver Ausbildung in den durch die Ansprüche definierten Schutzbereich fallen.

### Bezugszeichenliste

- 1: Ventilgehäuse
- 2: Ventilbohrung
- 3: Frontseite
- 4: Frontseite
- 5: Speisedruckanschluss
- 6: Entlüftungsanschluss
- 7: Arbeitsanschluss
- 8: Arbeitsanschluss
- 9: Montagefläche
- 10: Druckmittelverteiler
- 11: Kanal
- 12: Durchgangsbohrung
- 13: Pilotventil
- 14: Ventilschieber
- 15: Dichtring
- 16: Kammer

## Patentansprüche

1. Mehrwegeventil zur Steuerung eines Druckmittelflusses von zumindest einem Arbeitsanschluss zu zumindest einem Entlüftungs- oder Speisedruckanschluss, umfassend:
- ein Ventilgehäuse (1) mit zumindest zwei zylindrischen Bohrungen (2a, 2b), in denen innere, mit den Anschlüssen verbundene Kammern ausgebildet sind, und die endseitig mit zumindest einer Verschlusskappe verschlossen sind,
- eine Ventilschieberanordnung zum Schalten des Druckmittelflusses zwischen den Anschlüssen, die axial bewegbar in den Bohrungen (2a, 2b) geführt ist,
**dadurch gekennzeichnet, dass** die Ventilschieberanordnung zumindest zwei zylindrische Ventilschieber (14a, 14b) umfasst, die im Durchmesser größer als in der Länge sind, welche parallel zueinander und in derselben Ebene innerhalb korrespondierender Bohrungen (2a, 2b) angeordnet sind, welche in Querrichtung durch das Ventilgehäuse (1) verlaufen, wobei die Ventilschieber (14a, 14b) unabhängig oder gleichzeitig bewegbar in den jeweiligen Bohrungen (2a, 2b) angeordnet sind, um verschiedene Ventilfunktionen bei einer schmalen Gehäusegestaltung zu ermöglichen.

2. Mehrwegeventil gemäß Anspruch 1,
**dadurch gekennzeichnet, dass** die Ventilschieberanordnung genau zwei Ventilschieber (14a, 14b) umfasst, die in zwei korrespondierenden Bohrungen (2a, 2b) im Ventilgehäuse (1) angeordnet sind und über das Ventilgehäuse (1) mit einem gemeinsamen Speisedruckanschluss (5), einem gemeinsamen Entlüftungsanschluss (6) und zwei Arbeitsanschlüssen (7, 8) verbunden sind.

3. Mehrwegeventil nach Anspruch 1 oder 2,
**dadurch gekennzeichnet, dass** die Anschlüsse (5 bis 8) auf einer Montagefläche (9) des Ventilgehäuses (1) angeordnet sind und nutartig entlang der Montagefläche (9) quer zur Achse der Ventilschieber (14a, 14b) verlaufen, um eine Verbindung zum Druckmittelverteiler (10) herzustellen.

4. Mehrwegeventil gemäß Anspruch 3,
**dadurch gekennzeichnet, dass** die nutförmigen Anschlüsse (5 bis 8) in genau drei Reihen angeordnet sind, wobei der gemeinsame Entlüftungsanschluss (6) von zwei koaxial nebeneinanderliegenden Arbeitsanschlüssen (7, 8) gefolgt ist, die wiederum von einem gemeinsamen Speisedruckanschluss (5) gefolgt sind.

5. Mehrwegeventil nach einem der Ansprüche 1 oder 2,
**dadurch gekennzeichnet, dass** zumindest der Speisedruckanschluss (5) und der Entlüftungsanschluss (6) direkt im Ventilgehäuse (1) als Durchgangsbohrungen parallel zur Achse der Ventilbohrungen (2a, 2b) verlaufen, um bei einer Montage mehrerer gleichartiger Ventilgehäuse zu einer Ventileinheit allen Mehrwegeventilen gemeinsame Speisedruck- und Entlüftungskanäle zu bilden.

6. Mehrwegeventil gemäß Anspruch 2,
**dadurch gekennzeichnet, dass** die Ventilschieber (14) in "normally-closed (NC)"-Funktion oder in "normally-open (NO)"-Funktion durch Anordnung von Dichtringen (15) auf den Ventilschiebern (14) in geeigneten unterschiedlichen axialen Abständen ausgestaltbar sind.

7. Mehrwegeventil gemäß Anspruch 1,
**dadurch gekennzeichnet, dass** die Ventilschieber (14) topfartig ausgebildet sind und eine Rückstellfeder innerhalb der je hierdurch gebildeten Kammer und zwischen dem Ventilgehäuse (1) und jeweils dem Ventilschieber (14) angeordnet ist, um eine monostabile Ventilfunktion alternativ zu einer bistabilen Ventilfunktion zu bilden.

8. Mehrwegeventil gemäß Anspruch 1,
**dadurch gekennzeichnet, dass** am Ventilgehäuse (1) zumindest ein Pilotventil (13a, 13b) angeordnet ist, um einen Steuerdruck zur Bewegung der Ventilschieber (14) in zumindest eine Richtung bereitzustellen.

## Claims

1. A multiport valve for controlling a pressure medium flow from at least one working port to at least one venting or feeding port, comprising:
- a valve housing (1) having at least two cylindrical bores (2a, 2b) in which internal chambers are formed to be in communication with the ports and closed with at least one closure cap at one end,
- a valve slide assembly for switching the pressure medium flow between ports and axially moveable within said bores (2a, 2b),
**characterized in that** said valve slide assembly comprises at least two cylindrical valve slides (14a, 14b) having diameters greater than their lengths and arranged parallel to each other and in a common plane within corresponding bores (2a, 2b), which extend through the valve housing (1) in a transverse direction, wherein said valve slides (14a, 14b) are independently or simultaneously moveable within each bore (2a, 2b) in order to enable various valve functions while maintaining a slim housing shape.

2. The multiport valve according to claim 1,
**characterized in that** said valve slide assembly has exactly two valve slides (14a, 14b) arranged in two corresponding bores (2a, 2b) within the valve housing (1) and connected via said valve housing (1) with a common feeding pressure port (5), a common venting port (6) and two working ports (7, 8).

3. The multiport valve according to claim 1 or 2,
**characterized in that** said ports (5 to 8) are arranged on a mounting surface (9) of said valve housing (1) and extend in the manner of a groove along said mounting surface (9) in a transverse direction to the axis of said valve slides (14a, 14b) to establish a connection with a pressure medium manifold (10).

4. The multiport valve according to claim 3,
**characterized in that** said groove-like ports (5 to 8) are arranged in exactly three rows, wherein said common venting port (6) is followed by two coaxially adjacent working ports (7, 8), in turn followed by a common feeding pressure port (5).

5. The multiport valve according to any one of claims 1 or 2,
**characterized in that** at least said feeding pressure port (5) and said venting port (6) extend directly within said valve housing (1) as through holes parallel to the axis of said valve bores (2a, 2b) in order to form common feeding pressure and venting channels for all multiport valves when a plurality of identical valve housings are mounted in a valve unit.

6. The multiport valve according to claim 2,
**characterized in that** said valve slide (14) can be configured in a normally-closed (NC) function or a normally-open (NO) function by the arrangement of sealing rings (15) on said valve slides (14) at different suitable axial intervals.

7. The multiport valve according to claim 1,
**characterized in that** said valve slide (14) has a pot-like configuration, and a restoring spring is arranged within the chambers thus formed and between the valve housing (1) and each of said valve slides (14) in order to form a monostable valve function as an alternative to a bistable valve function.

8. The multiport valve according to claim 1,
**characterized in that** at least one pilot valve (13a, 13b) is arranged on said valve housing (1) in order to provide a controlling pressure to move said valve slide (14) in at least one direction.

## Revendications

1. Vanne à plusieurs voies pour commander un écoulement de fluide sous pression depuis au moins un raccord de travail jusqu'au moins un raccord de purge ou de pression d'alimentation, comportant
- un boîtier de vanne (1) présentant au moins deux perçages cylindriques (2a, 2b) dans lesquels sont réalisées des chambres intérieures reliées aux raccords et qui sont refermés du côté extrémité par au moins un capuchon d'obturation,
- un agencement de tiroir de vanne pour commuter l'écoulement de fluide sous pression entre les raccords, qui est guidé axialement mobile dans les perçages (2a, 2b),
**caractérisée en ce que** l'agencement de tiroir de vanne comprend au moins deux tiroirs de vanne (14a, 14b) dont le diamètre est supérieur à la longueur, qui sont agencés parallèlement l'un à l'autre et dans le même plan à l'intérieur de perçages correspondants (2a, 2b), qui s'étendent en direction transversale à travers le boîtier de vanne (1), les tiroirs de vanne (14a, 14b) étant agencés mobiles indépendamment ou simultanément dans les perçages respectifs (2a, 2b), afin de permettre des fonctions différentes de la vanne, le boîtier étant réalisé avec une forme étroite.

2. Vanne à plusieurs voies selon la revendication 1, **caractérisée en ce que** l'agencement de tiroir de vanne comprend exactement deux tiroirs de vanne (14a, 14b) qui sont agencés dans deux perçages correspondants (2a, 2b) dans le boîtier de vanne (1) et qui sont reliés, par l'intermédiaire du boîtier de vanne (1), à un raccord commun de pression d'alimentation (5), à un raccord commun de purge (6) et à deux raccords de travail (7, 8).

3. Vanne à plusieurs voies selon l'une ou l'autre des revendications 1 et 2, **caractérisée en ce que** les raccords (5 à 8) sont agencés sur une surface de montage (9) du boîtier de vanne (1) et s'étendent en forme de gorge le long de la surface de montage (9) transversalement à l'axe des tiroirs de vanne (14a, 14b) afin d'établir une liaison vers le répartiteur de fluide sous pression (10).

4. Vanne à plusieurs voies selon la revendication 3, **caractérisée en ce que** les raccords (5 à 8) en forme de gorge sont agencés en exactement trois rangées, le raccord commun de purge (6) étant suivi par deux raccords de travail (7, 8) situés coaxialement l'un à côté de l'autre, qui sont suivis à leur tour par un raccord commun de pression d'alimentation (5).

5. Vanne à plusieurs voies selon l'une ou l'autre des revendications 1 et 2, **caractérisée en ce qu'**au moins le raccord de pression d'alimentation (5) et le raccord de purge (6) s'étendent directement dans le boîtier de vanne (1) à titre de perçages traversants parallèlement à l'axe des perçages de vanne (2a, 2b), afin de former, lors d'un montage de plusieurs boîtiers de vanne identiques en une unité de vannes, des canaux de pression d'alimentation et de purge communs à toutes les vannes à plusieurs voies.

6. Vanne à plusieurs voies selon la revendication 2, **caractérisée en ce que** les tiroirs de vanne (14) sont susceptibles d'être réalisés selon une fonction "normalement fermée (NF)" ou selon une fonction "normalement ouverte (NO)" par agencement d'anneaux d'étanchéité (15) sur les tiroirs de vanne (14) à des distances axiales différentes appropriées.

7. Vanne à plusieurs voies selon la revendication 1, **caractérisée en ce que** les tiroirs de vanne (14) sont réalisés en forme de pot, et **en ce qu'**un ressort de rappel est agencé à l'intérieur de chaque chambre, formée par ledit tiroir, et entre le boîtier de vanne (1) et le tiroir de vanne respectif (14), afin de former une fonction de vanne monostable en variante à une fonction de vanne bistable.

8. Vanne à plusieurs voies selon la revendication 1, **caractérisée en ce qu'**au moins une vanne pilote (13a, 13b) est agencée sur le boîtier de vanne (1), afin de fournir une pression de commande pour déplacer les tiroirs de vanne (14) dans au moins une direction.
